# EUROPÄISCHE PATENTSCHRIFT

(11) **EP 0 492 148 B1**
(45) Veröffentlichungstag und Bekanntmachung des Hinweises auf die Patenterteilung: **01.02.1995**
(21) Anmeldenummer: 91120108.5
(22) Anmeldetag: 26.11.1991
(51) Int. Cl.: B01D 9/00

(54) **Verfahren und Vorrichtung zur Kristallisation von Schmelzen**
Process and device for the crystallisation of melts
Procédé et dispositif de crystallisation de produits fondus

(30) Priorität: 22.12.1990 DE 4041670
(43) Veröffentlichungstag der Anmeldung: 01.07.1992
(73) Patentinhaber: Santrade Ltd., CH-6002 Luzern (CH)
(72) Erfinder: Schermutzki, Konrad, W-7148 Remseck 3 (DE); Würmseher, Herbert, Dr. Ing., W-8901 Meitingen (DE)
(74) Vertreter: Wilhelm & Dauster Patentanwälte European Patent Attorneys

(56) Entgegenhaltungen:
- EP-A- 0 063 688
- EP-A- 0 167 401
- FR-A- 1 220 220
- FR-A- 2 182 168
- US-A- 2 651 922
- US-A- 3 405 209

## Beschreibung

Die Erfindung betrifft ein Verfahren und eine Vorrichtung zur Kristallisation von Schmelzen, bei denen mindestens eine auf eine unterhalb des Kristallisationspunktes der Schmelze liegende Temperatur kühlbare Wandung vorgesehen ist, mit der die Schmelze in Berührung kommt und an der die Kristallbildung stattfindet.

Es sind Verfahren und Vorrichtungen bekannt (CH-PS 501 421), bei denen durch Wärmeentzug aus einer Schmelze eines chemischen Produktes Kristalle gebildet werden. Bei den bekannten Verfahren und Bauarten werden dabei rohrförmige Kristallisatoren vorgesehen, an deren Innenwänden die Schmelze und an deren Außenwänden das Kühlmittel in der Form eines Rieselfilmes herabläuft, so daß die gewünschte Kristallisation eintritt. Diese Kristallerzeugung erfolgt dabei zu dem Zweck, Schmelzen zu verfestigen oder chemische Produkte zu reinigen. Im letzteren Fall wird die Eigenschaft ausgenützt, daß Kristalle chemisch reiner als die Ausgangsschmelze sind. Man kann daher mit Verfahren und Vorrichtungen der eingangs genannten Art Verunreinigungen durch die Kristallbildung an die Korngrenzen drücken, so daß sie dann in einer Restschmelze verbleiben.

Diese bekannten Verfahren und Bauarten arbeiten diskontinuierlich. Zunächst nämlich muß die Schmelze an den gekühlten Wänden der Kristallisatoren auskristallisieren. Nachdem dies geschehen ist, wird die Kristallschicht aufgeschmolzen und läuft an den Wänden herunter.

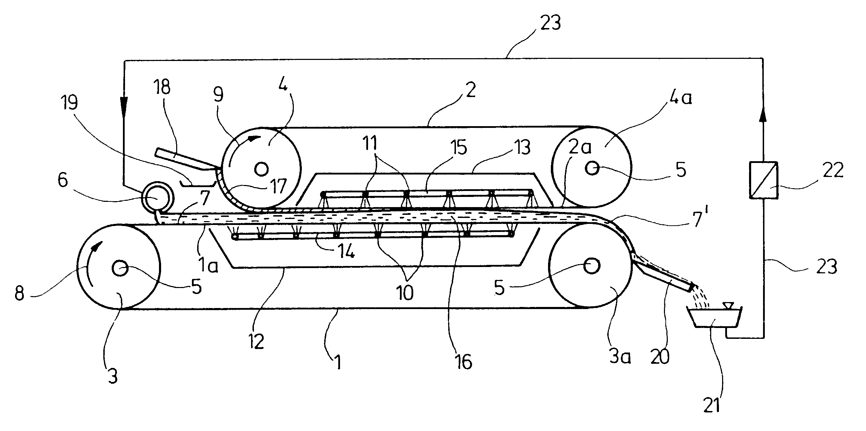

Aus der FR-A 1 220 220 ist auch eine kontinuierliche Arbeitsweise zur Bildung von Kristallisat bekannt. Dort wird bei einem Ausführungsbeispiel (Fig. 10) Schmelze auf das Obertrum eines schräg nach oben laufenden endlosen Bandes aufgegeben, wobei unter diesem Obertrum eine Kühleinrichtung sitzt. Auf dem Band bilden sich daher Kristalle, die am oberen Totpunkt der oberen Umlenkwalze des Bandes aufgeheizt werden, so daß die aus der aufgegebenen Mischung durch Kristallisation abgetrennte Substanz am Ende des Bandes abtropfen und aufgefangen werden kann. Die Restschmelze läuft aufgrund der Schräge des Bandes nach der anderen Seite ab. Da sich Kirstallisat und Restschmelze auf dem gleichen Band befinden, kann die Effektivität bei der Gewinnung reiner Substanzen beeinträchtigt sein.

Aus der FR-A 2 182 168 ist schließlich auch noch eine kontinuierlich arbeitende Vorrichtung zur Gewinnung von fester Substanz aus flüssigen Phasen bekannt, bei der man einen Schacht für die aufzugebende flüssige Phase durch vier ein Rechteck bildende Bänder gebildet hat, die jeweils das innere Trum von endlos umlaufenden Bändern sind. Mindestens zwei einander gegenüberliegende Trums werden dabei vom Inneren der endloden Bänder her gekühlt oder geheizt und ihre Drehrichtung ist so gewählt, daß die die Schachtwandung bildenden Trums der Bänder nach unten bewegt werden. Nach unten ist der Schacht durch eine geschlossene Kammer fortgesetzt, die einen Verschluß in Form eines Mahlwerkes aufweist. Das sich durch die Kühlung an den nach unten bewegten Wänden jeweils bildende Kristallisat wird daher dem Mahlwerk zugeführt und zu kleinen Stücken zerrieben. Die Restschmelze gelangt dabei ebenfalls zum Mahlwerk und kann die Entnahme des reinen Kristallisats beeinträchtigen.

Der vorliegenden Erfindung liegt die Aufgabe zugrunde, ein Verfahren und eine Vorrichtung der eingangs genannten Art so auszubilden, daß einerseits eine kontinuierliche Entnahme des kristallisierten Produktes und andererseits eine definierte Abfuhr von Restschmelze so möglich ist, daß das gewonnene Kristallisat nicht beeinträchtigt werden kann.

Zur Lösung dieser Aufgabe werden bei einem Verfahren der eingangs genannten Art zwei etwa parallel zueinander und jeweils in einer Ebene liegende gegenläufig bewegte Wandungen vorgesehen, von denen eine mit der Schmelze versehen wird und die andere die kühlbare Wandung ist, die in Berührung mit der Oberfläche der Schmelze gebracht wird, so daß von der einen Wandung eine Kristallschicht von der Oberfläche der Schmelze abgezogen und entgegengesetzt zu der mit der anderen Wandung abgeführten Restschmelze kontinuierlich entnommen werden kann. Durch diese Ausgestaltung wird es möglich, eine Kistallschicht von der Oberfläche einer Schmelze nach einer Seite abzuziehen, so daß dann diese abgezogene Kristallschicht laufend entnommen und weiterverarbeitet werden kann. Andererseits wird die Restschmelze nach der entgegengesetzten Seite abgeführt, von wo sie ebenfalls wieder aufbereitet und ggf. dem Prozeß erneut zugeführt werden kann.

Dabei ist es nach den Merkmalen des Anspruches 2 vorteilhaft, wenn die mit der Schmelze versehene Wandung auf einer Temperatur gehalten wird, die in der Nähe der Temperatur des Kristallisationspunktes liegt, weil dann die Berührung der Schmelzenoberfläche mit der gekühlten Wand sehr schnell zu der gewünschten Kristallisation des Produktes führt.

Zur Durchführung des erfindungsgemäßen Verfahrens eignet sich in ganz besonderer Weise eine Vorrichtung nach den Merkmalen des Anspruches 3. In den Spalt der einander zugewandten Trums kann bei dieser Vorrichtung die Schmelze von einer Seite her eingebracht werden und läuft mit dem Trägerband in der einen Richtung, während das an der oberen Begrenzung des Spaltes mit der Schmelzenoberfläche in Berührung kommende Trum des darüber liegenden Bandes entgegengesetzt zum Trägerband läuft und eine Kristallschicht von der Schmelze abzieht, die dann in einfacher Weise durch eine bekannte Abnahmeeinrichtung vom Band abgenommen werden kann. Vom Trägerband wiederum kann an der entgegengesetzten Seite die Restschmelze abgenommen werden.

Vorteilhafte Weiterbildungen der erfindungsgemäßen Vorrichtung sind in den Unteransprüchen 4 bis 11 gekennzeichnet. Die Merkmale des Anspruches 4 bieten dabei den - an sich bekannten - Vorteil, daß dem unteren umlaufenden Band ein Aufgabenbereich zugeordnet wird, in dem noch vor dem Spalt zwischen den beiden Bändern in beliebiger Weise die Schmelze aufgebracht werden kann. Das kann beispielsweise streifenförmig, in der Form einer durchgehenden Schicht, aber auch in Form von Tropfen geschehen, die dann in den Spalt der beiden Bänder hereingefördert werden. Neben der in den Unteransprüchen 5 und 6 gekennzeichneten Abnahmevorrichtung für die Kristallschicht kann nach Anspruch 7 auch dem unteren Trägerband an seiner hinteren Umlenkwalze eine Abstreifvorrichtung für die Restschmelze zugeordnet werden, der nach Anspruch 11 wiederum eine Auffangeinrichtung zugeordnet werden kann, so daß die Restschmelze über eine Wiederaufschmelzeinrichtung zur Aufgabeeinrichtung zurückgeführt werden kann.

Nach den Merkmalen der Ansprüche 8 bis 10 kann die Temperier- und die Kühleinrichtung jeweils als eine Sprühdüsenanordnung ausgebildet sein, die mit einer entsprechenden Flüssigkeit, beispielsweise mit Wasser oder auch mit Kühlsohlen o.dgl. arbeiten kann.

Die Erfindung ist anhand eines Ausführungsbeispieles schematisch in der Zeichnung dargestellt. Die einzige Zeichnung zeigt dabei eine Vorrichtung zur Durchführung des erfindungsgemäßen Verfahrens.

In der Zeichnung ist eine Doppelbandanlage, bestehend aus einem Unterband (1) und einem Oberband (2) gezeigt, die beide jeweils um Umlenkwalzen (3, 3a) bzw. (4, 4a) geführt sind. Die Achsen (5) aller Umlenkwalzen (3, 3a, 4, 4a) liegen horizontal.

Das Unterband (1), das ebenso wie das Oberband (2) ein endloses Band ist und beispielsweise ein Stahlband sein kann, ist etwas länger als das Oberband (2) ausgeführt und es besitzt an seinem oberen Trum (1a) noch vor der Umlenkwalze (4) des Oberbandes (2) einen Bereich, in dein eine Aufgabeeinrichtung (6) für eine Schmelze (7) vorgesehen ist, die durch Aufschmelzen eines kristallisationsfähigen Materiales gebildet ist. Die Aufgabevorrichtung (6) kann dabei ein an seiner Unterseite mit einem Schlitz versehenes Aufgaberohr sein, das quer zur Bandlaufrichtung (8) des Unterbandes (1) verläuft. Es könnte aber auch ein bekannter Streifengießer oder eine Einrichtung zum Aufbringen der Schmelze in Tropfenform vorgesehen sein.

Das Oberband (2) besitzt eine Laufrichtung (9), die den gleichen Drehsinn wie die des Unterbandes aufweist. Die einander zugewandten Trums (1a) des Unterbandes einerseits und (2a) des Oberbandes andererseits, die einen parallelen Spalt bilden, laufen daher in entgegengesetzter Richtung.

Sowohl dem Unterband (1) als auch dem Oberband (2) ist innerhalb des Bandumlaufes eine mit mehreren Sprühdüsen (10 bzw. 11) versehene Sprüheinrichtung zugeordnet, die jeweils innerhalb einer Abdeckung (12 bzw. 13) so angeordnet ist, daß das Obertrum (1a) des Unterbandes (1) von unten und das Untertrum (2a) des Oberbandes (2) von oben mit einer Flüssigkeit besprüht wird, die den unteren Sprühdüsen (10) über ein schematisch angedeutetes Leitungssystem (14) und den Sprühdüsen (11) über ein Leitungssystem (15) zugeführt wird, das in nicht näher dargestellter Weise seitlich von den endlosen Bändern an einen Flüssigkeitskreislauf angeschlossen ist. Die dem Leitungssystem (14) zugeführte Flüssigkeit wird dabei auf einer Temperatur gehalten, die einer in der Nähe des Kristallisationspunktes der Schmelze (7) liegenden, aber noch etwas niedrigeren Temperatur als die des Kristallisationspunktes entspricht. Das Leitungssystem (15) dagegen wird mit einer Kühlflüssigkeit versorgt, deren Temperatur unterhalb der Temperatur des Kristallisationspunktes der Schmelze (7) liegt. Durch das jeweils auf die von dem Spalt (16), in dem sich die Schmelze (7) befindet, abgewandte Seite der Bänder (2 und 1) auftreffende Sprühmittel wird der in dem Spalt (16) befindlichen Schmelze (7) Wärme zu- bzw. abgeführt. Über das Obertrum (1a) wird die Schmelze dabei auf einer bestimmten, vorher erwähnten Temperatur gehalten, während die mit dem Untertrum (2a) des Oberbandes (2) in Berührung kommende Oberfläche der Schmelze (7) innerhalb des Spaltes (16) stark abgekühlt wird, so daß sich am Untertrum (2a) beginnend im Bereich hinter der Umlenkwalze (4a) eine Kristallisationsschicht aus der Schmelze (7) ansetzen wird, die in der Förderrichtung (9) des Oberbandes (2), d. h. also entgegengesetzt zu der Aufgaberichtung (8) der Schmelze (7) aus dem Spalt (16) herausgeführt wird. Die Kristallisationsschicht (17), die dabei an dem Oberband (2) auch noch im Umlenkbereich der Umlenkwalze (4) anhaften bleibt, kann dann durch eine Abnahmevorrichtung (18), beispielsweise durch ein Abschabemesser vom Band (2) abgenommen und auf eine schematisch angedeutete Transporteinrichtung (19) gegeben werden, die die abgenommene Kristallschicht, die bei der Abnahme zerbröckelt, seitlich aus dem Bereich der umlaufenden Bänder (1 und 2) zur weiteren Verarbeitung herausführen kann.

Der Umlenkwalze (3a) des Unterbandes (1) ist dabei eine Abstreifeinrichtung (20), beispielsweise in der Form eines Spachtels o.dgl., zugeordnet, mit der die Restschmelze (7') vom Endbereich des Unterbandes (1) abgenommen und in eine Auffangeinrichtung (21) geführt werden kann. Von dieser Auffangeinrichtung (21) aus kann die Schmelze über einen schematisch angedeuteten Wärmetauscher (22) zur Wiederaufschmelzung und zur Erreichung der ursprünglichen Aufgabetemperatur über eine Rückführleitung (23) wieder zur Aufgabeeinrichtung (6) zurückgeführt werden. Natürlich wäre es auch möglich, die Auffangeinrichtung (21) selbst schon mit einem Wärmetauscher zu versehen, um die Rückgewinnung der Restschmelze zu erreichen. Das anhand der in der Zeichnung dargestellten Vorrichtung durchgeführte Verfahren erlaubt eine kontinuierliche Herstellung eines Kristallisats und die kontinuierliche Gewinnung desselben zum Zweck einer Weiterverarbeitung.

## Patentansprüche

1. Verfahren zur Kristallisation von Schmelzen, bei dem mindestens eine auf eine unterhalb des Kristallisationspunktes der Schmelze liegende Temperatur kühlbare Wandung vorgesehen ist, mit der die Schmelze in Berührung kommt und an der die Kristallbildung stattfindet, und bei dem zwei etwa parallel zueinander und jeweils in einer Ebene liegende, gegenläufig bewegte Wandungen (1a, 2a) vorgesehen sind, von denen eine (1a) mit der Schmelze (7) versehen wird und die andere (2a) die kühlbare Wandung ist, die in Berührung mit der Oberfläche der Schmelze (7) gebracht wird, so daß von der einen Wandung (2a) eine Kristallschicht von der Oberfläche der Schmelze (7) abgezogen und entgegengesetzt zu der mit der anderen Wandung (1a) abgeführten Restschmelze kontinuierlich entnommen werden kann.

2. Verfahren nach Anspruch 1, dadurch gekennzeichnet, daß die mit der Schmelze (7) versehene Wandung (1a) auf einer Temperatur gehalten wird, die knapp über der Temperatur des Kristallisationspunktes der Schmelze liegt.

3. Vorrichtung zur Durchführung des Verfahrens nach den Ansprüchen 1 oder 2, dadurch gekennzeichnet, daß zwei endlose und um jeweils zwei Walzen (3, 3a) bzw. (4, 4a) umgelenkte Bänder (1, 2) vorgesehen sind, die mit einem Trum (1a,2a) parallel zueinander ausgerichtet sind und einen Spalt (16) bilden, daß beide Bänder (1, 2) im gleichen Drehsinn (8, 9) angetrieben sind und daß jeweils dem oberen Band (2) eine Abnahmevorrichtung (18) für die Kristallschicht und dem unteren Band (1) eine Entnahmeeinrichtung (20) für die Restschmelze zugeordnet sind.

4. Vorrichtung nach Anspruch 3, dadurch gekennzeichnet, daß die Umlenkwalzen (3, 3a, 4, 4a) der beiden Bänder (1, 2) horizontal verlaufende Achsen (5) aufweisen, daß das Unterband (1) länger als das Oberband (2) ausgebildet ist und daß die in der Bewegungsrichtung des an den Spalt (16) angrenzenden Trums (1a) des Unterbandes vorne liegende Umlenkwalze (3) vor der vorderen Umlenkwalze (4) des Oberbandes liegt und dem Obertrum (1a) des unteren Bandes (1) im Bereich vor dem Oberband (2) eine Aufgabeeinrichtung (6) für die Schmelze (7) zugeordnet ist.

5. Vorrichtung nach einem der Ansprüche 3 oder 4, dadurch gekennzeichnet, daß das Oberband (2) im Bereich seiner vorderen Umlenkwalze (4) mit einer Abnahmeeinrichtung (18) für die anhaftende Kristallschicht (17) versehen ist.

6. Vorrichtung nach Anspruch 5, dadurch gekennzeichnet, daß die Abnahmevorrichtung (18) als ein Schaber ausgebildet ist.

7. Vorrichtung nach einem der Ansprüche 3 bis 6, dadurch gekennzeichnet, daß das Unterband (1) an seiner hinteren Umlenkwalze (3a) mit einer Abstreifeinrichtung (20) für die anhaftende Restschmelze (7') versehen ist.

8. Vorrichtung nach einem der Ansprüche 3 bis 7, dadurch gekennzeichnet, daß das Unterband (1) mit einer innerhalb des Bandumlaufes angeordneten, das obere Trum (1a) von unten beaufschlagende Temperiereinrichtung (14, 10) versehen ist.

9. Vorrichtung nach einem der Ansprüche 3 bis 7, dadurch gekennzeichnet, daß das Oberband (2) innerhalb seines Bandumlaufes mit einer das untere Trum (2a) von oben beaufschlagende Kühleinrichtung (15, 11) versehen ist.

10. Vorrichtung nach den Ansprüchen 8 und 9, dadurch gekennzeichnet, daß die Temperier- und die Kühleinrichtung jeweils als eine mit Sprühdüsen (10 bzw. 11) versehene Flüssigkeitssprühanlage ausgebildet ist.

11. Vorrichtung nach Anspruch 7, dadurch gekennzeichnet, daß der Abstreifeinrichtung (20) eine Auffangeinrichtung (21) für die Restschmelze (7') zugeordnet ist, die über eine Wiederaufschmelzeinrichtung (22) mit der Aufgabeeinrichtung (6) in Verbindung steht.

## Claims

1. A method of crystallising fused masses in which at least one wall is provided which can be cooled to a temperature below the crystallisation point of the fused mass and with which the fused mass comes into contact and on which the crystal formation takes place and in which two substantially parallel oppositely moved walls (1a, 2a) are provided which lie in one plane and of which one (1a) carries the fused mass (7) while the other (2a) is the coolable wall which is brought into contact with the surface of the fused mass (7) so that a layer of crystals is stripped from the surface of the fused mass (7) by one wall (2a) and can be continuously removed in the opposite direction to the residual fused mass which is carried away with the other wall (1a).

2. A method according to Claim 1, characterised in that the wall (1a) which carries the fused mass (7) is maintained at a temperature which is just above the temperature of the crystallisation point of the fused mass.

3. An apparatus for carrying out the method according to Claims 1 or 2, characterised in that two endless belts (1, 2) are provided which are deflected about in each case two rollers (3, 3a) and (4, 4a), the belts having one strand (1a, 2a) parallel with that of the other and forming a gap (16) and in that both belts (1, 2) are driven in the same direction (8, 9) and in that in each case there is associated with the upper belt (2) a device (18) for removing the layer of crystals while a device (20) for removing the residual fused mass is associated with the lower belt (1).

4. An apparatus according to Claim 3, characterised in that the deflector rollers (3, 3a, 4, 4a) of the two belts (1, 2) have horizontally extending spindles (5) and in that the bottom belt (1) is longer than the upper belt (2) and in that the deflecting roller (3) situated in front in the direction of movement of that strand (1a) of the lower belt which is adjacent the gap (16) is situated in front of the front deflecting roller (4) of the upper belt and in that an apparatus (6) for feeding fused mass (7) is associated with the upper strand (1a) of the lower belt (1) in the area in front of the upper belt (2).

5. An apparatus according to one of Claims 3 or 4, characterised in that the upper belt (2) is provided in the region of its front deflecting roller (4) with an apparatus (18) for removing the adhering crystal layer (17).

6. An apparatus according to Claim 5, characterised in that the removal device (18) is constructed as a scraper.

7. An apparatus according to one of Claims 3 to 6, characterised in that at its rear deflecting roller (3a), the lower belt (1) is provided with means (20) of scraping off the adhering residual fused mass (7').

8. An apparatus according to one of Claims 3 to 7, characterised in that the lower belt (1) is provided with, disposed inside the belt revolution, a temperature-regulating means (14, 10) which acts on the upper belt (1a) from below.

9. An apparatus according to one of Claims 3 to 7, characterised in that the upper belt (2) is within its belt revolution provided with a cooling means (15, 11) which acts on the lower strand (2a) from above.

10. An apparatus according to Claims 8 and 9, characterised in that the temperature-regulating and cooling means are in each case constructed as a liquid spraying system provided with spray jets (10, 11).

11. An apparatus according to Claim 7, characterised in that there is associated with the scraper means (20) catching means (21) for receiving the residual fused mass (7') and which communicates by a re-melting apparatus (22) to the feed means (6).

## Revendications

1. Procédé de cristallisation de masses fondues, selon lequel il est prévu au moins une paroi pouvant être refroidie à une température inférieure au point de cristallisation de la masse fondue et avec laquelle la masse fondue vient en contact et sur laquelle se produit la formation de cristaux, et selon lequel il est prévu deux parois (1a,2a) approximativement parallèles entre elles, situées respectivement dans un plan et déplacées en des sens opposés et dont l'une (1a) est pourvue de la masse fondue (7) et dont l'autre (2a) est la paroi pouvant être refroidie et qui est amenée en contact avec la surface de la masse fondue (7), de sorte qu'une couche de cristal est retirée de la surface de la masse fondue (7) par l'une des parois (2a) et peut être prélevée continûment en sens opposée de la masse fondue résiduelle évacuée par l'autre paroi (1a).

2. Procédé selon la revendication 1, caractérisé en ce que la paroi (1a) pourvue de la masse fondue (7) est maintenue à une température qui est située juste au-dessus de la température du point de cristallisation de la masse fondue.

3. Dispositif pour la mise en oeuvre du procédé selon la revendication 1 ou 2, caractérisé en ce qu'il est prévu deux bandes sans fin (1,2), qui circulent autour de deux rouleaux respectifs (3,3a) ou (4,4a) et dont un brin (1a,2a) d'une bande est parallèle à un brin de l'autre bande et qui délimitent une fente (16), que les deux bandes (1,2) sont entraînées dans le même sens de rotation (8,9) et qu'un dispositif (18) de prélèvement de la couche de cristal est associé à la bande supérieure (2) et qu'un dispositif (20) de prélèvement de la masse fondue est associé à la bande inférieure (1).

4. Dispositif selon la revendication 3, caractérisé en ce que les rouleaux de renvoi (3,3a,4,4a) des deux bandes (1,2) possèdent des axes horizontaux (5), que la bande inférieure (1) est plus longue que la bande supérieure (2) et que le rouleau de renvoi (3), qui est situé en amont dans la direction de déplacement du brin (1a) de la bande inférieure, qui jouxte la fente (16), est situé en amont du rouleau avant de renvoi (4) de la bande supérieure, et qu'un dispositif (6) de chargement de la masse fondue (7) est associé au brin supérieur (1a) de la bande inférieure (1) dans une zone située en amont de la bande supérieure (2).

5. Dispositif selon l'une des revendications 3 ou 4, caractérisé en ce que la bande supérieure (2) comporte, au niveau de son rouleau de renvoi avant (4), un dispositif (18) servant à prélever la couche de cristal adhérente (17).

6. Dispositif selon la revendication 5, caractérisé en ce que le dispositif de prélèvement (18) est réalisé sous la forme d'une racle.

7. Dispositif selon l'une des revendications 3 à 6, caractérisé en ce que la bande inférieure (1) comporte, à proximité de son rouleau de renvoi arrière (3a), un dispositif (20) servant à racler la masse fondue résiduelle adhérente (7').

8. Dispositif selon l'une des revendications 3 à 7, caractérisé en ce que la bande inférieure (1) est équipée d'un dispositif de mise en température (14,10), qui est disposé à l'intérieur du contour de circulation de la bande et charge à partir du bas le brin supérieur (1a).

9. Dispositif selon l'une des revendications 3 à 7, caractérisé en ce que la bande supérieure (2) est équipée, à l'intérieur de son contour de circulation, d'un dispositif de refroidissement (15,11), qui charge le brin inférieur (2a) à partir du haut.

10. Dispositif selon l'une des revendications 8 et 9, caractérisé en ce que le dispositif de mise en température et le dispositif de refroidissement sont constitués chacun sous la forme d'une installation de projection de liquide comportant des buses de pulvérisation (10 ou 11).

11. Dispositif selon la revendication 7, caractérisé en ce qu'au dispositif de raclage (20) est associé un dispositif (21) de collecte de la masse fondue résiduelle (7'), qui est relié au dispositif de chargement (6) par l'intermédiaire d'un dispositif de refusion (22).
